Europäisches Patentamt

European Patent Office

Office européen des brevets

(11) Publication number: **0 026 831**
A1

## EUROPEAN PATENT APPLICATION

(21) Application number: **80104989.1**

(22) Date of filing: **21.08.80**

(51) Int. Cl.³: **B 65 C 11/02,** G 06 K 1/12,
B 41 K 3/08

(30) Priority: **08.10.79 JP 138350/79 U**

(43) Date of publication of application: **15.04.81**
**Bulletin 81/15**

(84) Designated Contracting States: **CH DE FR GB IT LI NL**
**SE**

(71) Applicant: **Kabushiki Kaisha Sato, 15-5, 1-chome,**
**Shibuya, Shibuya-ku Tokyo (JP)**

(72) Inventor: **Sato, Yo, 21-23, 3-chome, Kamikitazawa,**
**Setagaya-ku, Tokyo (JP)**

(74) Representative: **Patentanwälte Dipl.-Ing. A. Grünecker,**
**Dr.-Ing. H. Kinkeldey, Dr.-Ing. W. Stockmair,, Dr. rer. nat.**
**K. Schumann, Dipl.-Ing. P.H. Jakob, Dr. rer. nat. G.**
**Bezold Maximilianstrasse 43, D-8000 München 22 (DE)**

(54) Bar code printing device.

(57) Herein disclosed is a printing device for printing such bar codes as can be automatically read in all directions by means of an optical reader. The printing device includes a printing head (10) which is operated with respect to the body of the printing device. Further inclusive are a plurality of bar code type rings (17) provided in said printing head and juxtaposed in alignment with one another such that they can rotate independently of one another. The bar code type rings (17) are manually brought apart from one another during the type selecting operations and into close contact with one another during the type printing operations. Further inclusive is a stopper (1) which is adapted to protrude out of the casing of the printing head (10) only during the type selecting operations by the actions of the selecting shaft (29) thereby to cause obstruction to the type printing operations.

ACTORUM AG

Bar Code Printing Device

The present invention relates to a printing device for printing such bar codes as can be automatically read in all directions by means of an optical reader. More particularly, the present invention relates to improvements in a bar code printing device which is used with a portable label printing and applying machine or a table type automatic label printing machine for printing labels or tags with bar codes.

## Description of the Prior Art

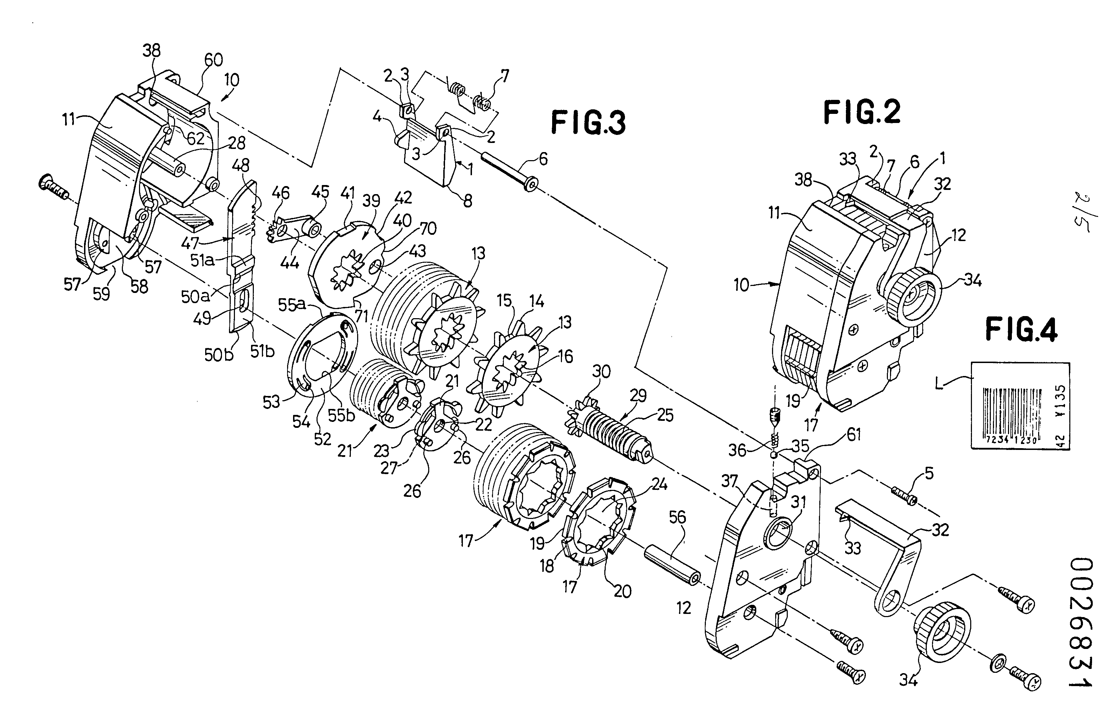

In large-sized supermarkets, recently, the POS (Point-Of-Sale) system using a computer has been put into practice. In Japan, the JAN (Japanese Article Number) code is regulated as a display example of that POS system by Ministry of International Trade & Industry. As a standard type of the JAN code, as shown in Fig. 4 of the accompanying drawings, each numeral is composed of one character, in which two dark bars having a length of 14 mm and two light spaces are combined in parallel. The character thus composed has a width of 2.31 mm while requiring for the tolerance of ± 0.101 mm.

Even if any bar code type ring composed of the dark bars and light spaces having the regulated sizes corresponding to each numeral is made accurate, there arises a

- 2 -                                    0026831

problem of the accuracy in the gaps between any two adjacent
type rings which are arranged in alignment with one another.
More specifically, since even any light space located at
one end of each bar code type plays an important role as
a symbol, formation of the unnecessary gaps between the
type rings will result in that the optical reader cannot
read out the correct numeral.  If, on the other hand, the
bar code type rings are fixed in their closely contacting
conditions, it becomes impossible to selectively turn any
desired type ring.

     Thus, there has been proposed and practised according
to the prior art a bar code printing device of the type, in
which gaps necessary for ensuring rotations of the bar code
type rings are formed inbetween, when the type rings are
to be selectively turned, thereby to smoothen the selections
and in which the type rings are brought into close contact,
during the printing operations, to eliminate those gaps so
that the widthwise errors of the type rings may be minimized.

     During the use of the aforementioned bar code printing
device, however, it frequently takes place that the operations
for closely fixing the type rings thereby to convert the
type selecting operations into the type printing operations
are forgotten so that the printing operations are carried
out under the aforementioned type selectable condition, i.e.,
under the condition in which the gaps are left between the type rings. As a result, the labels or tags printed become useless. In case, moreover, those labels or tags are erroneously applied to commodities, the result is that the optical reader fails to read out the correct information, thus inviting a serious trouble in the practices of the POS system.

SUMMARY OF THE INVENTION

With the background taken into consideration, therefore, it is an object of the present invention to provide a bar code printing device of the type, in which a stopper acts to cause obstruction to type printing operations under a type selecting condition so that the correct printing operations may be accomplished at all times.

According to a feature of the present invention, there is provided a bar code printing device including: a printing head operated with respect to the body of said printing device; a plurality of bar code type rings provided in said printing head and juxtaposed in alignment with one another such that they can rotate independently of one another; and a selecting shaft adapted to be manually actuated to bring said bar code type rings apart from one another during the type selecting operations and into close contact with one another during the printing operations, wherein the improvement comprises a stopper adapted to protrude out of the casing of said printing head only during the type selecting operations by the actions of said selecting shaft thereby to cause obstruction to the type printing operations.

BRIEF DESCRIPTION OF THE DRAWINGS

Other objects and advantages of the present invention will become apparent from the following description taken in conjunction with one embodiment thereof with reference to the accompanying drawings, in which:

Fig. 1 is a side elevation showing the whole construction of a hand labeler equipped with bar code printing device according to the present invention;

Fig. 2 is a perspective view showing the exterior of the printing device of the present invention;

Fig. 3 is an exploded perspective view of the same;

Fig. 4 is a top plan view showing a sheet of label printed with bar codes;

Fig. 5 is a longitudinal section showing the printing device of the present invention;

Figs. 6(A) and (B) are sections taken along line VI - VI of Fig. 5 but show type selecting and printing operations, respectively; and

Figs. 7(A) and (B) are longitudinal sections of an essential portion under the type selecting and printing operations, respectively.

DESCRIPTION OF THE PREFERRED EMBODIMENT

The present invention will now be described in more detail with reference to the accompanying drawings.

A bar code printing head 10 is constructed, as shown in Figs. 2 and 3, to include a plurality of bar code type rings 17 and a plurality of index rings 13 which are juxtaposed to mesh with the type rings 17. These type rings 17 and the index rings 13 are accommodated rotatably in respective alignments within the space which is defined by a casing 11 and a cover frame 12.

First of all, each of the multiple index rings 13, which are disposed at a high position in the printing head 10, is formed on its outer circumference with ten teeth 14 and ten kinds of index numerals 15 including 1 to 9 which are arranged between the two adjacent teeth 14. The index ring 13 is further formed in its center hole with internal teeth 16 which are to mesh with a later-described selecting shaft 29.

The multiple bar code type rings 17 meshing with the aforementioned index rings 13 are disposed at a low position in the printing head 10. Each of those type rings 17 is formed on its outer circumference with engagement dents 18, which are in meshing engagement with the aforementioned external teeth 14, and with printing surfaces which are provided by bar code types 19 and arranged between those engagement dents 18. The type ring 17 is formed into an equilateral decagonal shape, and the bar code types 19 at the respective sides of the decagonal shape are made to have such predetermined shapes as correspond to the index numerals 15 of the aforementioned index ring 13 and are set to protrude from a bar code printing aperture 59 which is formed at the lowermost position of the printing head 10. Moreover, the bar code type ring 17 is formed with a star-shaped hole 24 which in turn is formed with internal teeth 20 on the internal circumference thereof and in which is arranged a corresponding pivot member 21 fixed on a main shaft 56.

Each of the pivot members 21, which are arranged to correspond to the bar code type rings 17, respectively, is integrally formed with a pair of elastic engagement members 23 which have their leading ends bulging to have elastic engagement with the internal teeth 20 on the inner circumference of the corresponding barcode type ring 17 thereby to angularly position the same type ring 17.

Each of the pivot members 21 has its one side formed with a pair of studs 26 and its other side formed with a pair of grooves 27 which are shaped and positioned to correspond to those studs 26. The adjoining pivot members 21 are integrated into a block by the engagements between the studs 26 and the grooves 27. Moreover, the aforementioned main shaft 56 is screwed into the side frame of the casing 11 and into the cover frame 12 and is fixedly fitted in the center holes 22 which are formed at the centers of the respective pivot members 21.

Next, the selecting shaft 29 is made of a cylinder and is brought into desired one of the grouped index rings 17 thereby to selectively turn the same. The selecting shaft 29 thus constructed is fitted on a guide shaft 28 which is fixed to the casing 11 of the printing head 10 such that it is made slidable in the axial direction. Moreover, the selecting shaft 29 has its leading end carrying a pinion 30, which is made engageable with the internal teeth 16 of one of the index rings 13, its body extending through a guide hole 31 in the cover frame 12 and carrying an indicator 32, which is equipped with an arrow 33 for indicating one of the index numerals 15 of one of the index rings 13, and its trailing end to which a selecting knob 34 is fixed by means of a not-numbered screw.

Incidentally, the indications of both the index numerals 15 of those index rings 13 and a later-described cam member 39 are observed through an index aperture 38, which is formed in the upper side of the printing head 10, for the subsequent operations.

Between the upper side and the guide hole 31 of the aforementioned cover frame 12, there is formed a through hole 37 in which is accommodated a steel ball 35 while being
biased by means of a coil spring 36. The steel ball 35 is
urged into the guide hole 31 until it engages with one of
multiple annular grooves 25, which are formed on the outer
circumference of the selecting shaft 29, thereby to axially
position the same shaft 29.

Next, the cam member 39 is arranged behind the group
of the index rings 13 and is formed with internal teeth 40
which are to mesh with the pinion 30 of the aforementioned
selecting member 29. The cam member 39 is further formed
on its outer circumference with an indication "Select" 41,
an indication "Print" 42, a selecting shallow groove 70
and a printing deep groove 71 in this order.

Moreover, an actuating arm 44 is fixed to one side
of the cam member 39. Specifically, the actuating arm 44
has its ring 45 fitted in an actuating hole 43 of the cam
member 39 and its pinion 46 formed at its leading end and
meshing with the rack 48 of an actuating member 47 which
is made vertically movable relative to the casing 11 of the
printing head 10.

The actuating member 47 is arranged behind the group
of the bar code type rings 17 and has its lower portion
formed with a slot 49 in which is loosely fitted the afore-
mentioned main shaft 56. The actuating member 47 is further
formed with slopes 50a and 50b and land surfaces 51a and

0026831

51b on its side facing the grouped type rings. On the other hand, a thrust member 52 is sandwitched between the actuating member 47 and the group of the bar code type rings 17. The thrust member 52 has its one side formed with slopes 55a and 55b, which are shaped and positioned to correspond to the slopes 50a and 50b of the aforementioned actuating member 47, and its other side formed with a plutality of elastic flaps 53 which are punched to thrust the group of the aforementioned type rings 17. For this operation, the elastic flaps 53 are formed with projections 54 at their leading ends.

The aforementioned actuating member 47, which is made vertically slidable, is received in a guide surface 58 which is defined by the vertical space between such crescent bearing members 57 as are formed on the inner wall of the aforementioned casing 11. Thus, the bearing members 57 act as the guide members of the actuating member 47.

Next, the aforementioned casing 11 and cover frame 12 are formed with notches 60 and 61 at their respective upper corners. The casing 11 is further formed with a slot 62 below one side of the notch 60. A stopper 1 has its upper both ends rotatably attached to the aforementioned notches 60 and 61.

More specifically, the stopper 1 has its upper end bifurcated into two arms 2 and its inner wall formed with a retaining projection at its one side. The aforementioned arms 2 are formed with holes 3. Thus, the stopper 1 is rotatably attached to the upper corner of the printing head 10, i.e., to the aforementioned notches 60 and 61 by means of a pin 6 which is inserted into the aforementioned holes 3 and which is fastened to cross between the casing 11 and the cover frame 12 by means of a fastening screw 5.

Incidentally, the stopper 1 has its lower portion always urged toward the printing head 10 by the action of a torsion spring 7 which is wound on the pin 6. As a result, the aforementioned retaining projection 4 is positioned in the slot 62 of the casing 11 such that its leading end always abuts against the outer circumference of the aforementioned cam member 39.

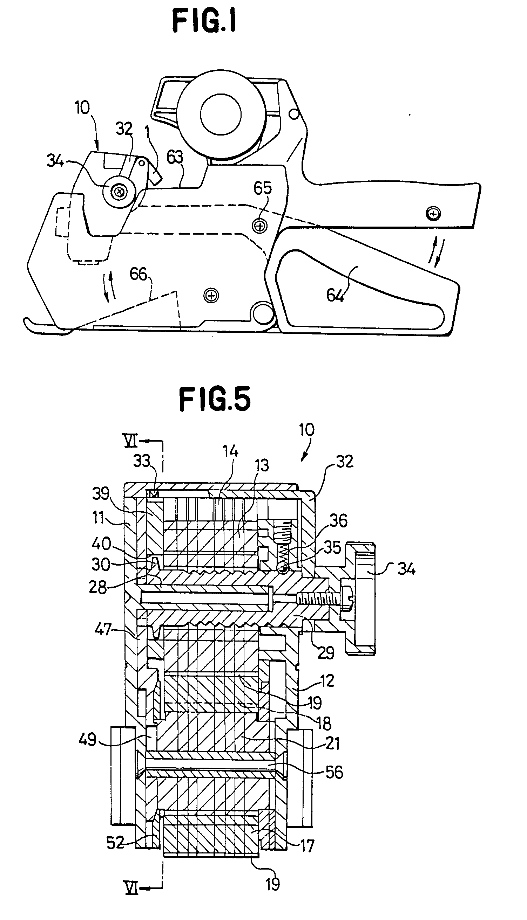

The operations of the bar code printing device according to the present invention will now be described as to the case, in which it is installed in a portable label printing and applying machine (which will be shortly referred to as a "hand labeler"), as shown in Fig. 1. In this Figure, reference numeral 63 indicates the machine frame of the hand labeler, and numeral 64 indicates an actuating lever which carries the bar code printing head 10 at its leading end. This actuating lever 64 is so attached to the machine frame 63 that it can be turned about a pivot 65. On the other hand, numeral 66 indicates a platen on which the labels are printed by the printing head 10.

Figs. 1, 6(A) and 7(A) show the condition under which the types to be printed are selected.  Then, the indication "Select" 41 appears at the upper upper end of the cam member 39 so that it can be observed through the index aperture 38, and the retaining projection 4 of the aforementioned stopper 1 is held in the selecting shallow groove 70 formed in the outer circumference of the cam member 39. As a result, the stopper 1 considerably protrudes backwardly of the printing head 10.  Therefore, even if the actuating lever 64 is squeezed to bring the printing head 10 into abutment against the platen 66 thereby to effect the printing operation, the lower side 8 of the stopper 1 abuts against the upper side of the machine frame 63 of the hand labeler, thus making it impossible to further squeeze the actuating lever 64 for the printing operations.

In other words, it is possible to completely obviate the printing operations while the types are being selected.

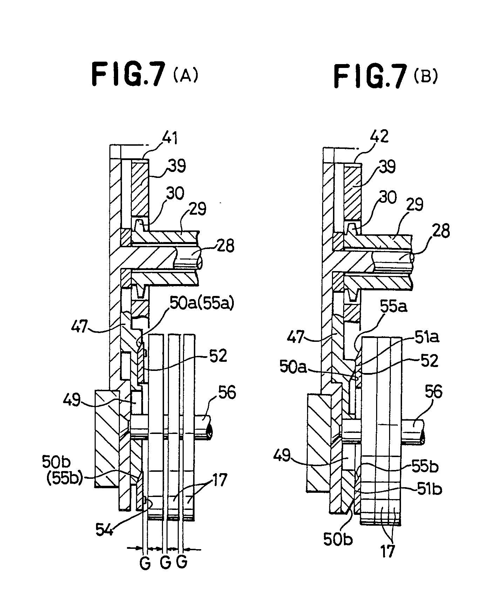

Under the type selecting condition thus far described, moreover, since the actuating member 47 meshing with the pinion 46 of the actuating arm 44 is at its upper limit position, its slopes 50a and 50b are in registered engagement with the slopes 55a and 55b of the thrust member 52, as shown in Fig. 7(A).  As a result, the thrust member 52 is not thrusted toward the type rings 17 so that gaps G for free rotations are formed between any two juxtaposed type rings 17.

Therefore, the rotational selections of the respective type rings 17 can be facilitated by the gaps G formed inbetween. More specifically, the aforementioned selecting knob 34 is axially pulled out to select the desired one of the bar code type rings 17 and is then turned to selectively bring the desired one of the bar code types 19 into the printing position in a smooth manner. In other words, the arrow 33 of the indicator 32, which is made movable in synchronism with the axial slide of the selecting knob 34, is brought into alignment with the desired index numeral 15 of the index ring 13 so that the desired bar code type 19 is selected when that desired index numeral is located.

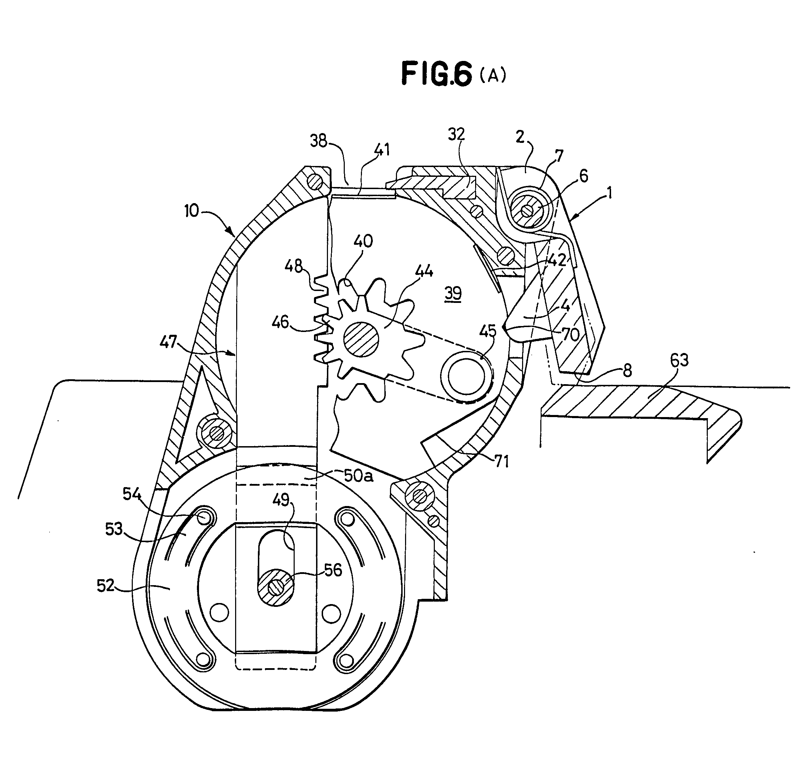

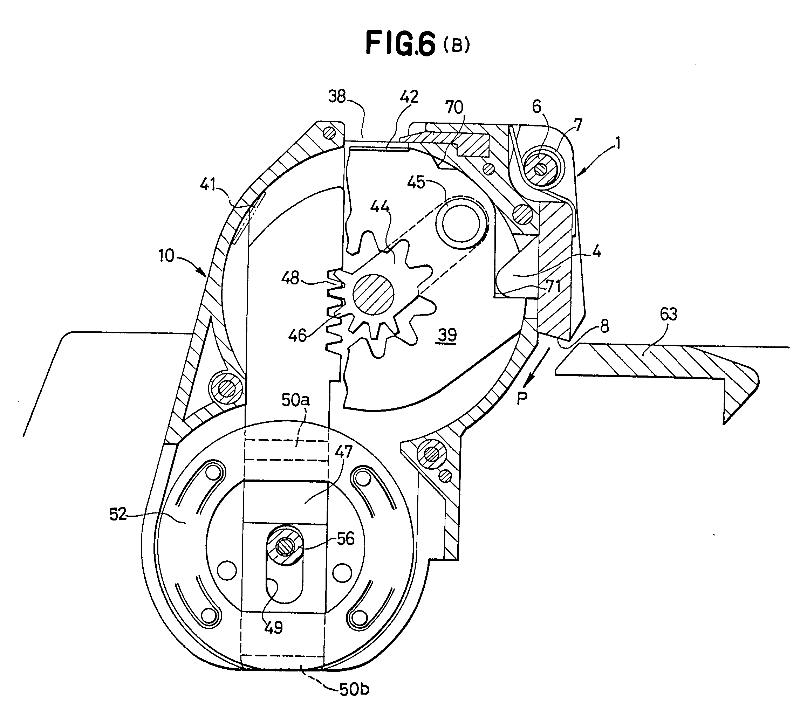

Next, in case the printing operations are to be accomplished after the desired type ring 17 and type 19 have been selected, as shown in Fig. 5, the selecting knob 34 is pushed into the printing head 10 and is turned counter-clockwise by a preset angle, as shown in Fig. 6(A), until the respective bar code type rings 17 are locked.

In response to the rotations of the selecting shaft 29, more specifically, the actuating member 47 is pushed down through the cam member 39 and the actuating arm 44, as shown in Figs. 6(B) and 7(B). As a result, the actuating member 47 has its slopes 50a and 50b sliding over the slopes 55a and 55b of the thrust member 52 until it brings its land surfaces 51a and 51b into abutment engagement with the side of the thrust member 52.  Thus, the projections 54, which are formed at the leading ends of the elastic flaps 53 of the thrust member 52, elastically thrust the bar code type rings 17 as a whole, as shown in Fig. 7(B), to eliminate the gaps G, which have been formed during the selections, so that the respective type rings 17 are brought into close contact with one another, thus making the light spaces of the selected bar code accurate.

By the counter-clockwise rotations of the cam member 39, on the other hand, the indication "Print" 42 is made to appear at the index aperture 38, as shown in Fig. 6(B), and the retaining projection 4 of the stopper 1 is held in the printing deep groove 71 formed in the outer circumference of the cam member 39.  As a result, the stopper 1 is turned clockwise by the action of the torsion spring 7 so that its portion protruding backwardly of the printing head 10 is accordingly reduced.  Consequently, even if the actuating lever 64 is squeezed for the printing operations so that the printing head 10 is brought obliequely downward (in the direction of arrow P), the stopper 1 can be carried downward as it is without having its lower side 8 abutting against the machine frame 63 of the hand labeler so that the

label held on the platen 66 can be printed.

If it is intended to restart the type selections after the printing operations, it is sufficient to turn the cam member 39 clockwise with the use of the selecting knob
34 until the type selecting condition shown in Figs. 6(A)
and 7(A) is restored. After that, the desired bar code
types are selected by the procedures described hereinabove.

In the embodiment thus far described, incidentally,
the actuating arm 44 formed with the pinion 46 is sandwitched
between the actuating arm 47 and the cam member 39 which is
in meshing engagement with the pinion 30 of the selecting
member 29. However, the present invention should not be
limited to the embodiment but can be modified such that
the cam member 39 is so toothed as to directly mesh with
the rack 48 of the actuating member 47.

Moreover, it is quite natural that the present invention
can also be applied to the bar code printing device of the
type in which the index numerals are formed between any two
adjacent bar code types of the outer circumference of the
type rings while dispensing with the index rings.

As has been described hereinbefore, according to the
present invention, there is provided the stopper which is
operative to protrude out of the casing of the printing
device only during the type selecting operations thereby
to cause obstruction to the printing operations. As a
result, it is possible to completely avoid any fear of the
printing operations being erroneously accomplished during
the type selections, i.e., while the gaps G are formed between the respective type rings.  Consequently, the printing
operations are always accomplished under the normal condition,
i.e., with the respective type rings being in close contact.
Thus, the present invention can enjoy the remarkable effect
in practice that the efficiency of the printing operations
of the labels or tags can be highly improved.

CLAIMS:

1. A bar code printing device including: a printing head operated with respect to the body of said printing device; a plurality of bar code type rings provided in said printing head and juxtaposed in alignment with one another such that they can rotate independently of one another; and a selecting shaft adapted to be manually actuated to bring said bar code type rings apart from one another during the type selecting operations and into close contact with one another during the type printing operations, wherein the improvement comprises a stopper adapted to protrude out of the casing of said printing head only during the type selecting operations by the actions of said selecting shaft thereby to cause obstruction to the type printing operations.

2. A bar code printing device according to claim 1, wherein said stopper is carried on the casing of said printing head and urged to a retracted position where it causes no obstruction.

3. A bar code printing device according to claim 2, further comprising a cam member made coactive with said selecting shaft for bringing said stopper into the protruding position against the urging force.

# FIG.1

# FIG.5

FIG.3

FIG.2

FIG.4

38 60 10
11 62 28
48
57 57
57 59 58 51a
50a
49 50b 51b
46 45 41 39 42
44 40 70
43 13
55a 71
53 55b 15 14
54 52 21 13
21 23 22 16
27 26
26 30 29 25
17 19
18 17 20 56
12
2 3 7
4 3 2
8 1 6
33 2 7 6 1
38 11 32
10 12
19 17 34
36 35 61
37 31 5
32
33
34

L

7234 1230
42 Y 135

0026831

2/5

# FIG.6 (A)

# FIG.6 (B)

4/5

0026831

**FIG.7** (A)     **FIG.7** (B)

# EUROPEAN SEARCH REPORT

European Patent Office

## DOCUMENTS CONSIDERED TO BE RELEVANT

| Category | Citation of document with indication, where appropriate, of relevant passages | Relevant to claim |
|---|---|---|
| A | <u>DE - A - 2 715 462</u> (K.K. SATO)<br>* Figures 1-12 *<br><br>-- | 1 |
| A | <u>US - A - 3 828 667</u> (DAVIS)<br>* Figures 1-3 *<br><br>-- | 1 |
| A | <u>US - A - 3 508 488</u> (MAUL)<br>* Column 2, lines 24-31; column 5, line 73 - column 6, line 39 *<br><br>-- | 1 |
| A | <u>US - A - 3 722 405</u> (MAHONEY)<br>* Figures 6-8; column 1, lines 35-50; column 10, line 5 - column 11, line 49 *<br><br>---- | 1 |

CLASSIFICATION OF THE APPLICATION (Int. Cl.3)

B 65 C 11/02
G 06 K 1/12
B 41 K 3/08

TECHNICAL FIELDS SEARCHED (Int. Cl.3)

B 41 K 3/08
         5/02
B 65 C 9/46
        11/00
        11/02
G 06 K 1/12

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 12-01-1981 | PESCHEL |

EPO Form 1503.1   06.78